# EUROPÄISCHE PATENTANMELDUNG

(11) **EP 3 806 299 A1**
(43) Veröffentlichungstag der Anmeldung: **14.04.2021**
(21) Anmeldenummer: 19202757.1
(22) Anmeldetag: 11.10.2019
(51) Int. Cl.: H02K 15/12

(54) **ISOLIEREN EINER SPULENWICKLUNG EINES AKTIVTEILS EINER ELEKTRISCHEN MASCHINE**

(71) Anmelder: Siemens Aktiengesellschaft, 80333 München (DE)
(72) Erfinder: Burghard, Matthias Johannes, 12099 Berlin (DE); Festa, Marco, 14612 Falkensee (DE)

(57) **Zusammenfassung**

Die Erfindung betrifft ein Verfahren zum Isolieren einer Spulenwicklung (3) eines Aktivteils (5) einer rotierenden elektrischen Maschine. Dabei wird das Aktivteil (5) zunächst in einem wannenartigen Tränkbehälter (7) durch Vakuum-Druck-Imprägnieren mit einem Isolierharz (30) getränkt. Anschließend wird der mit dem Isolierharz (30) befüllte Tränkbehälter (7) zusammen mit dem in ihm angeordneten Aktivteil (5) in einen Ausbackofen eingebracht und das Aktivteil (5) in dem Isolierharz (30) wird in Rotation um eine Längsachse (15) des Aktivteils (5) versetzt. Während das Aktivteil (5) rotiert, wird das Isolierharz (30) aus dem Tränkbehälter (7) abgeführt und danach wird die Ofentemperatur auf eine vorgegebene Ausbacktemperatur erhöht und für eine vorgegebene Ausbackdauer auf der Ausbacktemperatur gehalten. Die Rotation des Aktivteils (5) wird nach dem Ablauf der Ausbackdauer beendet.

## Beschreibung

Die Erfindung betrifft ein Verfahren zum Isolieren einer Spulenwicklung eines Aktivteils (das heißt eines Stators oder Rotors) einer rotierenden elektrischen Maschine und eine Vorrichtung zur Durchführung des Verfahrens.

Genauer betrifft die Erfindung das Isolieren einer Spulenwicklung eines Aktivteils einer rotierenden elektrischen Maschine, bei dem die Spulenwicklung durch so genanntes Vakuum-Druck-Imprägnieren (engl. Vacuum Pressure Impregnation, abgekürzt VPI) mit einem Isolierharz getränkt wird. Bei dem Vakuum-Druck-Imprägnieren wird das Aktivteil in einem Vakuum zunächst entgast und anschließend in das Isolierharz eingetaucht. Schließlich werden das Isolierharz und das in das Isolierharz eingetauchte Aktivteil einem Überdruck ausgesetzt, um das Isolierharz in die evakuierten, bisher noch nicht mit Isolierharz befüllten Hohlräume des Aktivteils zu drücken. Dabei muss verhindert werden, dass eine größere Menge von Isolierharz nach dem Tränken wieder aus dem Aktivteil herausläuft. Ein Auslaufen des Harzes hat zum einen den Nachteil, schlechtere Isolationswerte zu erzeugen, zum anderen aber dennoch gewichtigeren Nachteil, eine Isolation zu erzeugen, die leicht bei einer schlagartigen Dekompression beschädigt oder zerstört werden kann. Derartige Beschädigungen können durch Lunker in der Isolation entstehen, das heißt durch abgeschlossene Hohlräume, die durch ablaufendes Harz entstanden sind und in die im Betrieb der elektrischen Maschine unter hohem Prozessgasdruck, dem die Maschine ausgesetzt ist, Gas diffundiert und in denen somit dieser hohe Prozessgasdruck herrscht. Bei einem schnellen Druckabfall in der Umgebung der elektrischen Maschine kann das in die Lunker diffundierte Gas nicht schnell genug entweichen, so dass in den Lunkern ein Überdruck durch das dort verbliebene Gas entsteht, der zu einem Aufbrechen beziehungsweise Delaminieren der Isolation führt.

Bei bestimmten Harzen kann ein Auslaufen des Isolierharzes nach dem Tränken durch so einen genannten Beschleuniger reduziert werden, wobei es sich um einen Stoff handelt, der in die zu tränkende Spulenwicklung eingebracht ist und während des Tränkprozesses das Isolierharz gelieren lässt und somit am Auslaufen hindert. Allerdings kann ein derartiger Beschleuniger nicht bei allen Isolierharzen verwendet werden, insbesondere nicht bei speziellen Harzen, die für die Isolation der Wicklungen spezieller schnell laufender elektrischer Maschinen benötigt werden und bei der Kühlung durch Prozessgas unter Hochdruck beständig sein müssen.

Der Erfindung liegt die Aufgabe zugrunde, ein verbessertes Verfahren mit Vakuum-Druck-Imprägnieren zum Isolieren einer Spulenwicklung eines Aktivteils einer rotierenden elektrischen Maschine und eine Vorrichtung zur Durchführung des Verfahrens anzugeben.

Die Aufgabe wird erfindungsgemäß durch ein Verfahren mit den Merkmalen des Anspruchs 1 und eine Vorrichtung mit den Merkmalen des Anspruchs 7 gelöst.

Vorteilhafte Ausgestaltungen der Erfindung sind Gegenstand der Unteransprüche.

Bei dem erfindungsgemäßen Verfahren zum Isolieren einer Spulenwicklung eines Aktivteils einer rotierenden elektrischen Maschine wird das Aktivteil zunächst in einem wannenartigen Tränkbehälter durch Vakuum-Druck-Imprägnieren mit einem Isolierharz getränkt. Anschließend wird der immer noch mit dem Isolierharz befüllte Tränkbehälter zusammen mit dem in ihm angeordneten Aktivteil in einen Ausbackofen eingebracht und das Aktivteil in dem Isolierharz in Rotation um eine Längsachse des Aktivteils versetzt. Während das Aktivteil rotiert, wird das Isolierharz aus dem Tränkbehälter abgeführt und danach wird die Ofentemperatur auf eine vorgegebene Ausbacktemperatur erhöht und für eine vorgegebene Ausbackdauer auf der Ausbacktemperatur gehalten. Erst nach dem Ablauf der Ausbackdauer wird die Rotation des Aktivteils beendet.

Bei dem erfindungsgemäßen Verfahren wird ein Auslaufen des Isolierharzes aus dem Aktivteil nach dem Vakuum-Druck-Imprägnieren erheblich reduziert, indem das Aktivteil während des Aushärtens des Isolierharzes in Rotation versetzt und gehalten wird. Besonders vorteilhaft wird das Aktivteil dabei bereits in Rotation versetzt, während es noch in das Isolierharz eingetaucht ist, und die Rotation wird während des Ablassens des Isolierharzes aus dem Tränkbehälter und während des Ausbackens in dem Ausbackofen aufrecht erhalten. Dadurch wird insbesondere verhindert, dass zwischen dem Ablassen des Isolierharzes und dem Beginn des Ausbackens eine Zeit vergeht, in der das Aktivteil nicht rotiert und in der dementsprechend mehr Isolierharz auslaufen kann, weil das Aktivteil beispielsweise nach dem Ablassen des Isolierharzes erst zu dem Ausbackofen transportiert, dann in dem Ausbackofen positioniert und schließlich an den Rotationsantrieb angeschlossen werden muss.

Bei einer Ausgestaltung des erfindungsgemäßen Verfahrens wird das Aktivteil in dem Tränkbehälter durch einen Kettentrieb in Rotation versetzt. Insbesondere kann vorgesehen sein, dass das Aktivteil durch zwei Ketten, über die das Aktivteil an einem Aktivteilträger aufgehängt wird, in dem Tränkbehälter gehalten und über wenigstens eine der beiden Ketten in Rotation versetzt wird. Diese Ausgestaltung des erfindungsgemäßen Verfahrens berücksichtigt, dass das Aktivteil erfindungsgemäß zu Beginn der Rotation noch in das Isolierharz eingetaucht ist. Ein Kettentrieb ist diesem Aspekt der Erfindung angepasst, da er eine einfache Übertragung eines Antriebsmoments auf das Aktivteil durch eine Kette vorsieht, die zudem bei einer Verschmutzung durch das Isolierharz kostengünstig ersetzt werden kann. Außerdem ermöglicht diese Ausgestaltung des erfindungsgemäßen Verfahrens gleichzeitig ein zweckmäßiges Aufhängen des Aktivteils an einem Aktivteilträger über Ketten, um das Aktivteil während des Vakuum-Druck-Imprägnierens und der nachfolgenden Rotation des Aktivteils in dem Tränkbehälter zu halten.

Bei einer weiteren Ausgestaltung des erfindungsgemäßen Verfahrens wird der Ausbackofen vor dem Einbringen des mit dem Isolierharz befüllten Tränkbehälters und des in dem Tränkbehälter angeordneten Aktivteils auf eine Vorheiztemperatur vorgeheizt, die kleiner als die Ausbacktemperatur ist. Dadurch kann der Ausbackofen vorteilhaft auf eine Temperatur vorgeheizt werden, bei der das Isolierharz eine für das Ablassen des Isolierharzes geeignete Viskosität aufweist.

Bei einer weiteren Ausgestaltung des erfindungsgemäßen Verfahrens wird die Ofentemperatur nach dem Ablauf der Ausbackdauer gemäß einem vorgegebenen Temperaturabnahmeverlauf auf eine Endtemperatur gesenkt. Dabei kann vorgesehen sein, dass die Rotation des Aktivteils erst beendet wird, nachdem die Ofentemperatur die Endtemperatur erreicht hat. Diese Ausgestaltung des erfindungsgemäßen Verfahrens ermöglicht ein gleichmäßiges und gesteuertes Abkühlen des Aktivteils und des Isolierharzes an der Spulenwicklung, um durch Temperaturunterschiede verursachte Spannungen in dem Isolierharz zu verhindern, die die Isolierung beschädigen können.

Eine erfindungsgemäße Vorrichtung zur Durchführung des erfindungsgemäßen Verfahrens umfasst einen Tränkbehälter, der eingerichtet ist, das Aktivteil aufzunehmen und mit dem Isolierharz befüllt zu werden bis das Aktivteil vollständig in dem Isolierharz eingetaucht ist, wenigstens ein mit dem Aktivteil verbindbares erstes Kettenrad und einen Aktivteilträger, der eingerichtet ist, das Aktivteil in dem Tränkbehälter zu halten, und der für jedes erste Kettenrad ein zweites Kettenrad aufweist, das mit dem ersten Kettenrad über eine Kette verbindbar ist, wobei wenigstens ein zweites Kettenrad von einem Antrieb antreibbar ist, um das Aktivteil in Rotation um seine Längsachse zu versetzen. Eine erfindungsgemäße Vorrichtung ermöglicht die Durchführung des erfindungsgemäßen Verfahrens mit den oben bereits genannten Vorteilen.

Bei einer Ausgestaltung der erfindungsgemäßen Vorrichtung ist jedes erste Kettenrad über wenigstens ein Verbindungselement lösbar mit dem Aktivteil verbindbar. Dadurch kann ein erstes Kettenrad vorteilhaft mehrfach verwendet werden, um Spulenwicklungen von Aktivteilen zu isolieren.

Eine weitere Ausgestaltung der erfindungsgemäßen Vorrichtung sieht zwei erste Kettenräder vor, die an sich entlang der Längsachse des Aktivteils gegenüberliegenden Seiten des Aktivteils mit dem Aktivteil verbindbar sind und über die das Aktivteil mit jeweils einer Kette an dem Aktivteilträger aufhängbar ist, um das Aktivteil in dem Tränkbehälter zu halten. Dabei kann vorgesehen sein, dass ein Abstand der beiden zweiten Kettenräder einstellbar ist. Dies ermöglicht das oben bereits erwähnte Aufhängen des Aktivteils an dem Aktivteilträger durch zwei Ketten. Eine Einstellbarkeit des Abstands der beiden zweiten Kettenräder ermöglicht ferner vorteilhaft, den Abstand der zweiten Kettenräder an den Abstand der ersten Kettenräder beziehungsweise an die axiale Ausdehnung des Aktivteils anzupassen und die erfindungsgemäße Vorrichtung somit für Aktivteile unterschiedlicher axialer Ausdehnungen zu verwenden.

Bei einer weiteren Ausgestaltung der erfindungsgemäßen Vorrichtung weist der Tränkbehälter einen Behälterboden mit einer Ablaufrinne auf, die in eine durch ein Absperrorgan verschließbare Behälteröffnung mündet. Dadurch wird vorteilhaft insbesondere das Auslassen des Isolierharzes aus dem Tränkbehälter erleichtert.

Eine weitere Ausgestaltung der erfindungsgemäßen Vorrichtung sieht einen Trägereinsatz vor, der gitterartig angeordnete Wände aufweist und derart an dem Aktivteilträger anordenbar ist, dass die Wände in das Isolierharz oberhalb des Aktivteils hineinragen, wenn das Aktivteil in dem Tränkbehälter in das Isolierharz eingetaucht ist. Dadurch kann vorteilhaft ein Aufschaukeln des Isolierharzes in dem Tränkbehälter, insbesondere während eines Transports des mit dem Isolierharz befüllten Tränkbehälters in den Ausbackofen, reduziert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines Ausführungsbeispiels einer erfindungsgemäßen Vorrichtung zum Isolieren einer Spulenwicklung eines Aktivteils mit dem daran beziehungsweise darin angeordneten Aktivteil,
- FIG 2: eine perspektivische Darstellung des in FIG 1 gezeigten Aktivteils und mit dem Aktivteil verbundener erster Kettenräder,
- FIG 3: ein Ablaufdiagramm eines Ausführungsbeispiels des erfindungsgemäßen Verfahrens zum Isolieren einer Spulenwicklung eines Aktivteils.

Einander entsprechende Teile sind in den Figuren mit denselben Bezugszeichen versehen.

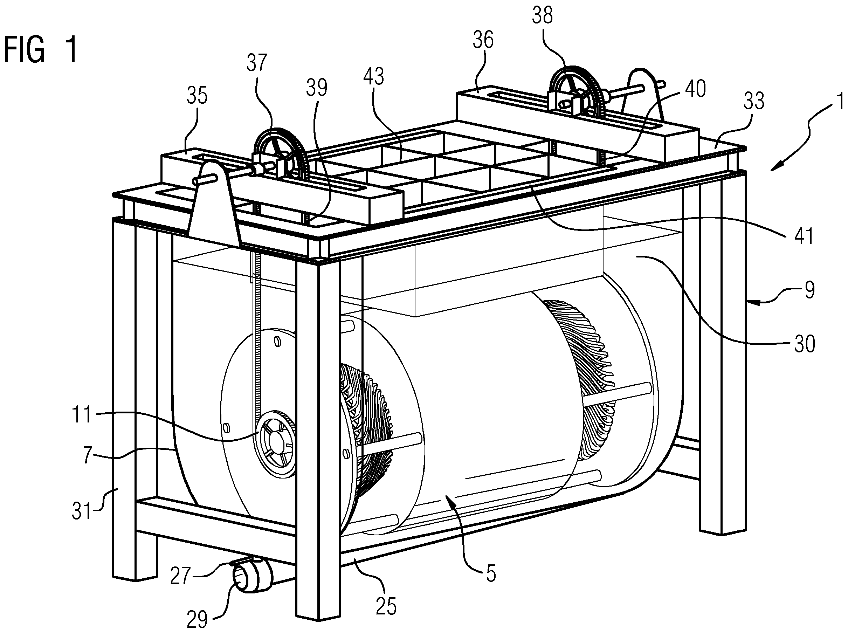

FIG 1 zeigt eine perspektivische Darstellung eines Ausführungsbeispiels einer erfindungsgemäßen Vorrichtung 1 zum Isolieren einer Spulenwicklung 3 eines Aktivteils 5 einer rotierenden elektrischen Maschine. Die Vorrichtung 1 umfasst einen Tränkbehälter 7, einen Aktivteilträger 9 und zwei erste Kettenräder 11, 12.

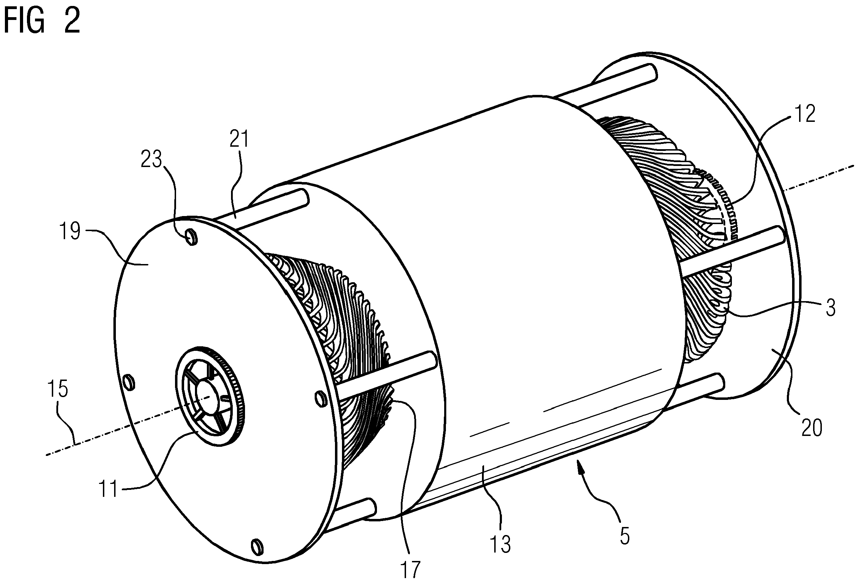

FIG 2 zeigt eine perspektivische Darstellung des in FIG 1 gezeigten Aktivteils 5 und der mit dem Aktivteil 5 verbundenen ersten Kettenräder 11, 12.

Das Aktivteil 5 weist ein Blechpaket 13 auf, das ringförmig um eine Längsachse 15 des Aktivteils 5 verläuft. Die Längsachse 15 definiert eine axiale Richtung. Das Blechpaket 13 weist axial verlaufende Nuten 17 auf, durch die gerade Abschnitte der Spulenwicklung 3 verlaufen, die an den beiden axialen Enden des Blechpakets 13 durch jeweils einen Wickelkopf der Spulenwicklung 3 zu Spulen verbunden sind. Die Nuten 17 sind durch (nicht dargestellte) Nutverschlusskeile verschlossen.

Die ersten Kettenräder 11, 12 sind auf sich axial gegenüberliegenden Seiten des Aktivteils 5 angeordnet und verlaufen jeweils um die Längsachse 15 herum. Jedes erste Kettenrad 11, 12 ist fest an einer Tragscheibe 19, 20 angeordnet, die durch als Verbindungsstangen ausgebildete Verbindungselemente 21 mit dem Blechpaket 13 verbunden ist. Die Tragscheiben 19, 20 sind durch Schraubverbindungen 23 lösbar mit den Verbindungselementen 21 verbunden.

Der Tränkbehälter 7 ist wannenfömig ausgebildet und weist einen Behälterboden mit einer Ablaufrinne 25 auf. Die Ablaufrinne 25 mündet in eine durch ein Absperrorgan 27 verschließbare Behälteröffnung 29 am tiefsten Punkt des Tränkbehälters 7. Der Tränkbehälter 7 ist mit einem Isolierharz 30 befüllt, so dass das Aktivteil 5 vollständig in das Isolierharz 30 eingetaucht ist.

Der Aktivteilträger 9 umfasst einen auf Trägerbeinen 31 angeordneten Trägerrahmen 33. Auf dem Trägerrahmen 33 sind zwei Trägerbalken 35, 36 angeordnet, an denen jeweils ein zweites Kettenrad 37, 38 angeordnet ist. Jedes zweite Kettenrad 37, 38 ist über eine Kette 39, 40 mit einem ersten Kettenrad 11, 12 verbunden. Die Trägerbalken 35, 36 können an verschiedenen Positionen am Trägerrahmen 33 befestigt werden, so dass der Abstand der zweiten Kettenräder 37, 38 dem Abstand der ersten Kettenräder 11, 12 beziehungsweise der axialen Ausdehnung des Aktivteils 5 angepasst werden kann.

In den Aktivteilträger 9 ist ein Trägereinsatz 41 eingesetzt, der gitterartig angeordnete Wände 43 aufweist. Die Wände 43 ragen in das Isolierharz 30 oberhalb des Aktivteils 5 hinein.

Das Aktivteil 5 ist mit den Ketten 39, 40 an dem Aktivteilträger 9 aufgehängt. Wenigstens ein zweites Kettenrad 37, 38 ist durch einen (nicht dargestellten) Antrieb antreibbar, um das Aktivteil 5 in Rotation um die Längsachse 15 zu versetzen.

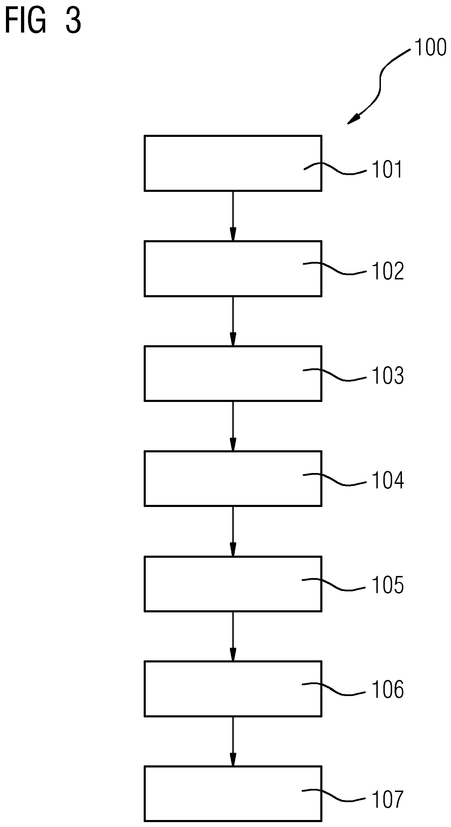

FIG 3 zeigt ein Ablaufdiagramm 100 eines Ausführungsbeispiels des erfindungsgemäßen Verfahrens mit Verfahrensschritten 101 bis 107 zum Isolieren der Spulenwicklung 3 des Aktivteils 5 unter Verwendung einer in FIG 1 gezeigten Vorrichtung 1.

In einem ersten Verfahrensschritt 101 wird das Aktivteil 5 in dem Tränkbehälter 7 durch Vakuum-Druck-Imprägnieren mit dem Isolierharz 30 getränkt. Dazu werden die Tragscheiben 19, 20 mit den Verbindungselementen 21 an dem Aktivteil 5 befestigt. Der Aktivteilträger 9 wird, beispielsweise mit einem Kran, über das Aktivteil 5 gehoben bis jedes erste Kettenrad 11, 12 in eine an einem zweiten Kettenrad 37, 38 aufgehängte Kette 39, 40 eingehängt werden kann. Nach dem Einhängen der ersten Kettenräder 11, 12 wird der Aktivteilträger 9 mit dem an ihm aufgehängten Aktivteil 5 angehoben und über dem Tränkbehälter 7 abgesenkt, so dass das Aktivteil 5 von dem Aktivteilträger 9 in dem Tränkbehälter 7 gehalten wird. Der Tränkbehälter 7 und der Aktivteilträger 9 werden anschließend miteinander verbunden, beispielsweise durch Schraubverbindungen. Der Tränkbehälter 7 und der Aktivteilträger 9 mit dem an ihm aufgehängten Aktivteil 5 werden dann in einen Druckkessel gefahren. Der Druckkessel wird verschlossen und evakuiert, und das Aktivteil wird eine vorgegebene Entgasungsdauer in dem evakuierten Druckkessel entgast. Gleichzeitig wird das Isolierharz 30 auf eine Vorheiztemperatur, beispielsweise auf etwa 70°C, erwärmt. Anschließend wird das erwärmte Isolierharz 30 in dem evakuierten Druckkessel durch die Behälteröffnung 29 in den Tränkbehälter 7 gepumpt bis der Füllstand des Isolierharzes 30 in dem Tränkbehälter 7 einen vorgegebenen Wert erreicht, bei dem das Aktivteil 5 vollständig in das Isolierharz 30 eingetaucht ist. Das Aktivteil 5 wird dann für eine Tränkdauer mit dem Isolierharz 30 getränkt. Daran anschließend wird der Druck in dem Druckkessel für eine Überdruckdauer auf einen Überdruck erhöht und anschließend wieder auf Normaldruck verringert.

In einem zweiten Verfahrensschritt 102 wird zunächst der Trägereinsatz 41 in den Trägerrahmen 33 eingesetzt. Anschließend werden der immer noch mit dem Isolierharz 30 befüllte Tränkbehälter 7 und der Aktivteilträger 9 mit dem an ihm in dem Isolierharz 30 aufgehängten Aktivteil 5 in einen auf die Vorheiztemperatur vorgeheizten Ausbackofen eingebracht.

In einem dritten Verfahrensschritt 103 wird das Aktivteil 5 in dem Isolierharz 30 in Rotation um die Längsachse 15, beispielsweise in eine Rotation mit einer Winkelgeschwindigkeit von etwa drei Umdrehungen pro Minute, versetzt, indem wenigstens ein zweites Kettenrad 37, 38 von dem Antrieb, beispielsweise über eine Kardanwelle, angetrieben wird.

In einem vierten Verfahrensschritt 104 wird das Isolierharz 30 aus dem Tränkbehälter 7 abgepumpt, während das Aktivteil 5 weiter in Rotation gehalten wird. Optional wird nach dem Abpumpen des Isolierharzes 30 eine großflächige Auffangwanne unter die offene Behälteröffnung 29 geschoben, um nachlaufendes Isolierharz 30, das beispielsweise von dem Aktivteil 5 abtropft, aufzufangen und großflächig zu verteilen, um eine Selbstentzündung des Isolierharzes 30 während des Ausbackens in einem fünften Verfahrensschritt 105 zu verhindern.

In dem fünften Verfahrensschritt 105 wird die Ofentemperatur auf eine vorgegebene Ausbacktemperatur, beispielsweise auf etwa 170°C, erhöht und für eine vorgegebene Ausbackdauer, beispielsweise für etwa acht Stunden, auf der Ausbacktemperatur gehalten.

In einem sechsten Verfahrensschritt 106 wird die Ofentemperatur gemäß einem vorgegebenen Temperaturabnahmeverlauf allmählich auf eine Endtemperatur gesenkt.

In einem siebten Verfahrensschritt 107 wird die Rotation des Aktivteils 5 beendet, nachdem die Ofentemperatur die Endtemperatur erreicht hat. Anschließend wird die abgekühlte Vorrichtung 1 demontiert und alle Komponenten der Vorrichtung 1, die mit dem Isolierharz 30 in Kontakt gekommen sind (der Tränkbehälter 7, die Kettenräder 11, 12, 37, 38, die Ketten 39, 40, die Tragscheiben 19, 20 und der Trägereinsatz 41) werden überprüft und gegebenenfalls gereinigt oder ersetzt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Isolieren einer Spulenwicklung (3) eines Aktivteils (5) einer rotierenden elektrischen Maschine, wobei
- das Aktivteil (5) in einem wannenartigen Tränkbehälter (7) durch Vakuum-Druck-Imprägnieren mit einem Isolierharz (30) getränkt wird und das Aktivteil (5) nach dem Tränken mit dem Isolierharz (30) in dem mit dem Isolierharz (30) befüllten Tränkbehälter (7) vollständig eingetaucht in das Isolierharz (30) gehalten wird,
- anschließend der mit dem Isolierharz (30) befüllte Tränkbehälter (7) zusammen mit dem in ihm angeordneten Aktivteil (5) in einen Ausbackofen eingebracht wird und das Aktivteil (5) in dem Isolierharz (30) in Rotation um eine Längsachse (15) des Aktivteils (5) versetzt wird,
- während das Aktivteil (5) rotiert, das Isolierharz (30) aus dem Tränkbehälter (7) abgeführt wird und danach die Ofentemperatur auf eine vorgegebene Ausbacktemperatur erhöht und für eine vorgegebene Ausbackdauer auf der Ausbacktemperatur gehalten wird,
- und die Rotation des Aktivteils (5) nach dem Ablauf der Ausbackdauer beendet wird.

2. Verfahren nach Anspruch 1, wobei das Aktivteil (5) in dem Tränkbehälter (7) durch einen Kettentrieb in Rotation versetzt wird.

3. Verfahren nach Anspruch 2, wobei das Aktivteil (5) durch zwei Ketten (39,40), über die das Aktivteil (5) an einem Aktivteilträger (9) aufgehängt wird, in dem Tränkbehälter (7) gehalten und über wenigstens eine der beiden Ketten (39,40) in Rotation versetzt wird.

4. Verfahren nach einem der vorhergehenden Ansprüche, wobei der Ausbackofen vor dem Einbringen des mit dem Isolierharz (30) befüllten Tränkbehälters (7) und des in dem Tränkbehälter (7) angeordneten Aktivteils (5) auf eine Vorheiztemperatur vorgeheizt wird, die kleiner als die Ausbacktemperatur ist.

5. Verfahren nach einem der vorhergehenden Ansprüche, wobei die Ofentemperatur nach dem Ablauf der Ausbackdauer gemäß einem vorgegebenen Temperaturabnahmeverlauf auf eine Endtemperatur gesenkt wird.

6. Verfahren nach Anspruch 5, wobei die Rotation des Aktivteils (5) beendet wird, nachdem die Ofentemperatur die Endtemperatur erreicht hat.

7. Vorrichtung (1) zur Durchführung des Verfahrens nach einem der vorhergehenden Ansprüche, die Vorrichtung (1) umfassend
- einen Tränkbehälter (7), der eingerichtet ist, das Aktivteil (5) aufzunehmen und mit dem Isolierharz (30) befüllt zu werden bis das Aktivteil (5) vollständig in dem Isolierharz (30) eingetaucht ist,
- wenigstens ein mit dem Aktivteil (5) verbindbares erstes Kettenrad (11,12) und
- einen Aktivteilträger (9), der eingerichtet ist, das Aktivteil (5) in dem Tränkbehälter (7) zu halten, und der für jedes erste Kettenrad (11,12) ein zweites Kettenrad (37,38) aufweist, das mit dem ersten Kettenrad (11,12) über eine Kette (39,40) verbindbar ist, wobei wenigstens ein zweites Kettenrad (37,38) von einem Antrieb antreibbar ist, um das Aktivteil (5) in Rotation um seine Längsachse (15) zu versetzen.

8. Vorrichtung (1) nach Anspruch 7, wobei jedes erste Kettenrad (11,12) über wenigstens ein Verbindungselement (21) lösbar mit dem Aktivteil (5) verbindbar ist.

9. Vorrichtung (1) nach Anspruch 7 oder 8, mit zwei ersten Kettenrädern (11,12), die an sich entlang der Längsachse (15) des Aktivteils (5) gegenüberliegenden Seiten des Aktivteils (5) mit dem Aktivteil (5) verbindbar sind und über die das Aktivteil (5) mit jeweils einer Kette (39,40) an dem Aktivteilträger (9) aufhängbar ist, um das Aktivteil (5) in dem Tränkbehälter (7) zu halten.

10. Vorrichtung (1) nach Anspruch 9, wobei ein Abstand der beiden zweiten Kettenräder (37,38) einstellbar ist.

11. Vorrichtung (1) nach einem der Ansprüche 7 bis 10, wobei der Tränkbehälter (7) einen Behälterboden mit einer Ablaufrinne (25) aufweist, die in eine durch ein Absperrorgan (27) verschließbare Behälteröffnung (29) mündet.

12. Vorrichtung (1) nach einem der Ansprüche 7 bis 11, mit einem Trägereinsatz (41), der gitterartig angeordnete Wände (43) aufweist und derart an dem Aktivteilträger (9) anordenbar ist, dass die Wände (43) in das Isolierharz (30) oberhalb des Aktivteils (5) hineinragen, wenn das Aktivteil (5) in dem Tränkbehälter (7) in das Isolierharz (30) eingetaucht ist.
